# EUROPEAN PATENT SPECIFICATION

(11) **EP 0 947 574 B1**
(45) Date of publication and mention of the grant of the patent: **02.01.2003**
(21) Application number: 98301938.1
(22) Date of filing: 16.03.1998
(51) Int. Cl.: C10G 1/10

(54) **Recycling apparatus for obtaining oil from plastic waste**
Wiederverwertungsanlage zur Gewinnung von Oel aus Kunststoffabfällen
Appareil de recyclage pour la récupération d'huile à partir de déchets de matières plastiques

(43) Date of publication of application: 06.10.1999
(73) Proprietor: MCC Co., Ltd., Nagano-city, Nagano 380-0911 (JP); Miwagumi Co., Ltd., Nagano-city, Nagano 380-0911 (JP)
(72) Inventor: Yoshimura, Takeki, Nagano-city, Nagano 381-1231 (JP)
(74) Representative: Haley, Stephen

(56) References cited:
- EP-A- 0 747 463
- WO-A-96/00268

## Description

This invention relates to recycling apparatus for obtaining oil from waste plastics.

Conventional apparatus obtain heavy oil (fuel oil A equivalent) from waste plastics (high-polymeric waste) after applying thermal decomposition under heat.

This type of conventional apparatus melts solid waste plastics (such as polyethylene, polysterol and vinyl chloride) at a relatively low temperature of approximately 250°C (or 70°C for vinyl chloride) in a melting tank, thermally decomposes the molten waste plastics in a thermal decomposition tank heated to approximately 400°C (or 170°C for vinyl chloride), and obtains heavy oil by cooling the gas produced by the thermal decomposition. If solid waste plastics are directly charged in the thermal decomposition tank, waste plastics will become carbonized. While this carbonization lowers recycling efficiency, the product of carbonization is not easy to dispose of. This is the reason why the melting tank to melt solid waste plastics first is provided.

However, conventional apparatuses of the type just mentioned have involved the following problems.

First, the need to use the melting tank in addition to the thermal decomposition tank makes the whole assembly more intricate, larger, more costly and difficult to maintain.

Second, the longer time required for the processing of waste plastics lowers the productivity and increases the production cost of heavy oil.

This invention solves the aforementioned problems with the conventional technologies. The object of this invention is to provide simple and compact recycling apparatus for obtaining oil from waste plastics that provide substantial cost savings and ease of maintenance while offering higher productivity and greater economy.

To achieve the above object, a recycling apparatus 1 for obtaining oil from waste plastic P by applying thermal decomposition under heat in a thermal decomposition tank 2 according to this invention comprises a tank proper 3 that is divided by a partition 7 into a thermal decomposition chamber Rf at the front and a melting chamber Rr at the rear that are connected to each other by a communicating space Rc below the partition 7 and heating pipes 4a, 4b, 4c, 4d, 4e and 4f communicating with a hot-air generator, the thermal decomposition chamber, the communicating space, the melting chamber and a flue duct leading to the outside atmosphere.

In the accompanying drawings:-
Fig. 1 is a cross-sectional side elevation of a thermal decomposition tank constituting the principal part of structure (1) and the first embodiment of the oil recycling apparatus according to this invention.
Fig. 2 is a cross-sectional front view taken along the line X-X of Fig. 1.
Fig. 3 is a cross-sectional view showing a part of a heating pipe in the thermal decomposition tank.
Fig. 4 is a block diagram showing the entirety of the oil recycling apparatus.
Fig. 5 is a block diagram of a heat-retaining device provided to the oil recycling apparatus.
Fig. 6 is a cross-sectional side elevation of a thermal decomposition tank that constitutes the principal part of structure (2) and the second embodiment of the oil recycling apparatus according to this invention.
Fig. 7 is a cross-sectional top view of a screw conveyor in the tank proper of the first design of the third embodiment.
Fig. 8 is a cross-sectional top view of rotor blades in the tank proper of the second design of the third embodiment.

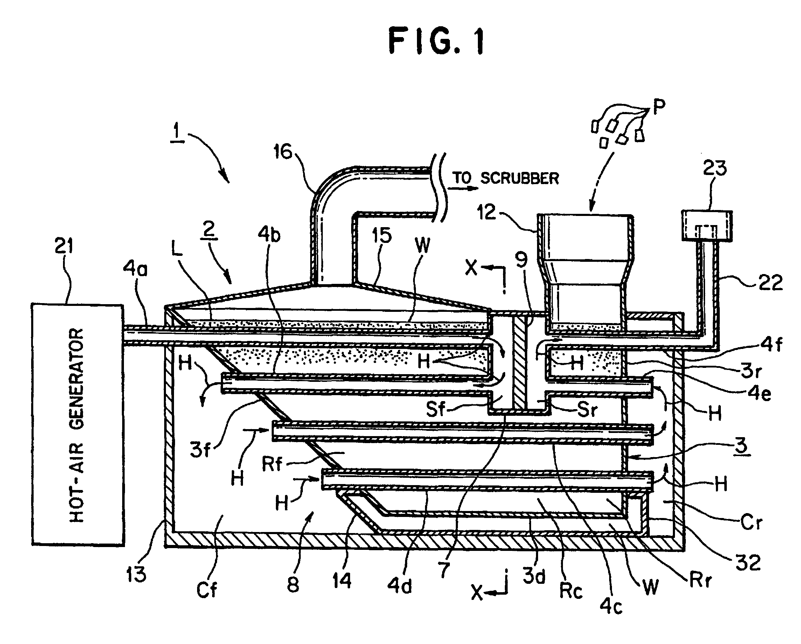

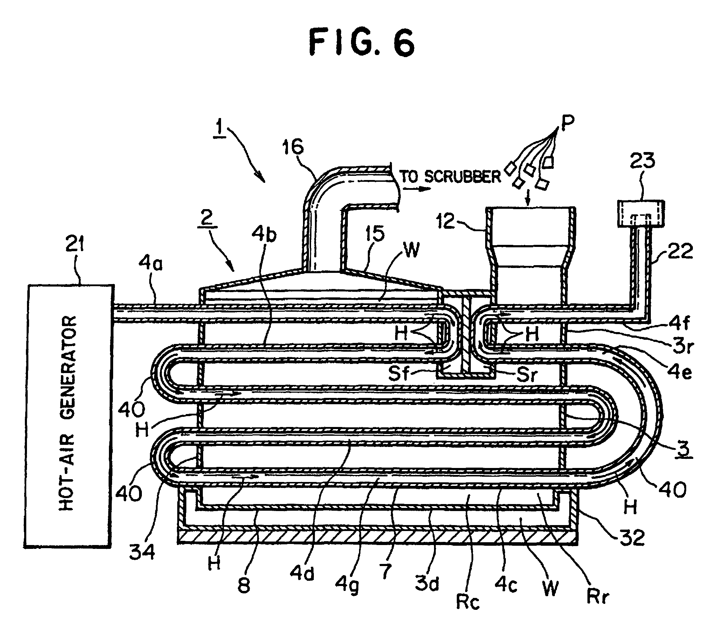

Figs. 1 and 6 shows embodiments for solving the problems with conventional apparatus described earlier.

The embodiment shown in Fig. 1 comprises a tank proper 3 shut off from the outside and having front and rear air passages 8, multiple heating pipes 4a, 4b, 4c, 4d, 4e and 4f disposed between a front communicating space Cf and a partition 7 (4a and 4b), between a rear communicating space Cr and the partition 7 (4e and 4f), and between the front and rear communicating spaces Cf and Cr (4c and 4d), a hot-air generator 21 to which the heating pipes between the front communicating space Cf and the partition 7 are connected, and a flue duct leading to the outside atmosphere to which the heating pipes (4e and 4f) between the rear communicating space Cr and the partition 7 are connected.

On the other hand, the embodiment shown in Fig. 6 has multiple heating pipes 4a, 4b, 4c, 4d, 4e and 4f that are bent and connected to the hot-air generator, melting chamber and flue duct in the order mentioned.

The arrangement shown in Figs. 1 and 6 permits keeping the heating pipes in the thermal decomposition chamber at a temperature suited for thermal decomposition, those in the melting chamber at a temperature suited for melting, and those in the communicating spaces at a temperature therebetween.

Solid waste plastic P charged into the melting chamber Rr is heated and melted by the heating pipes 4f, 4e, 4c and 4d that are kept at a relatively low temperature. The molten waste plastic L reaches the thermal decomposition chamber Rf through the communicating space Rc. As the quantity of the molten waste plastic L increases, the top level thereof ascends to the higher part of the thermal decomposition chamber Rf. The molten waste plastic L thus reaching the heating pipe 4a kept at a higher temperature in the higher part of the thermal decomposition chamber Rf is heated and gasified by thermal decomposition. The gasified cracked gas is cooled and liquefied into heavy oil (fuel oil A equivalent).

The thermal decomposition tank doubling as the melting tank is conducive to the overall simplification and size reduction of the apparatus and the achievement of substantial cost savings and ease of maintenance while offering higher productivity and greater economy in the production of heavy oil.

In Fig. 1, the tank proper 3 has a tapered front end 3f and is constricted toward the bottom. The constricted bottom permits reducing the heat required for keeping warm the molten waste plastic L from below when the apparatus is out of operation. When the apparatus is in operation, the molten waste plastic L ascends as its specific gravity grows lower as the transition from a molten state to a thermally decomposed state proceeds after the molten waste plastic L has moved through the communicating space Rc to the thermal decomposition chamber Rf. Therefore, the constricted bottom allows for the expansion of the ascending molten waste plastic.

The tank in the embodiment shown in Fig. 6 has an upright front 3f, without being constricted toward the bottom. However, it is of course possible to design its tank like that shown in Fig. 1.

Nevertheless, the designs described above are not the essential elements of this invention.

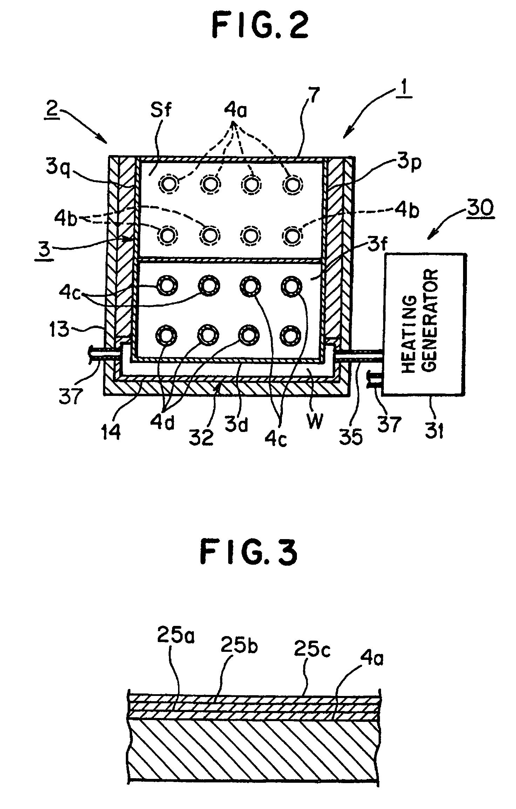

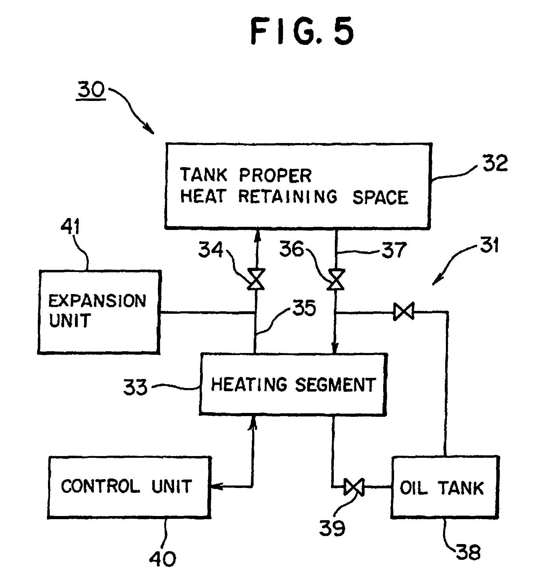

The embodiment shown in Fig. 1 will be described by reference to Figs. 2 and 5.

In the drawings, reference numeral 2 designates a thermal decomposition tank that constitutes the principal part of the oil recycling apparatus 1. The thermal decomposition tank 2 comprises a tank proper 3 that, in turn, consists of a front end 3f, a rear end 3r and a bottom 3d, as shown in Figs. 1 and 2.

A partition 7 is provided between the left side 3p and right side 3q in the middle of the tank 3. The partition 7 is a closed hollow structure. The inside of the partition 7 is divided by a partition wall 9 into a front space Sf and a rear space Sr. Thus, a thermal decomposition chamber Rf and a melting chamber Rr are formed before and behind the partition 7, while a communicating space Rc is formed below the partition 7.

The outer bottom of the tank proper 3 is covered with an outer plate 14, thus providing a closed heat-retaining space between the outer plate 14 and the tank proper 3. Heat-retaining oil w is supplied to the heat-retaining space 32 from a heating device 31 described later. In the first embodiment shown in Fig. 1, an outer housing 13 covers the tank proper 3 with the outer plate 14, the front communicating space Cf and the rear communicating space Cr. The front communicating space Cf is between the tapered front end 3f of the tank proper 3 and the outer housing 13, whereas the rear communicating space Cr is between the rear end 3r of the tank proper 3 and the outer housing 13.

Four horizontally spaced heating pipes 4a are provided in the uppermost part of the thermal decomposition chamber Rf, with the front openings thereof leading to the outside of the outer housing 13 and the rear (inner) openings connected to the front space Sf in the partition 7. A lower group of four horizontally spaced heating pipes 4b are similarly disposed in the thermal decomposition chamber Rf, with the front openings thereof leading to the front communicating space Cf and the rear (inner) openings connected to the front space Sf. Additional lower groups of four each horizontally spaced heating pipes 4c and 4d are also provided in the thermal decomposition chamber Rf. The heating pipes 4c and 4d pass through the thermal decomposition chamber Rf, communicating space Rc and melting chamber Rr. The openings at both ends of the heating pipes 4c and 4d lead to the front and rear communicating spaces Cf and Cr, as shown in Fig. 1.

Horizontally spaced four heating pipes 4f are provided in the uppermost part of the melting chamber Rr, with the front (inner) openings of the heating pipes 4f connected to the rear space Sr in the partition 7 and the rear openings thereof leading to the outside of the outer housing 13. A lower group of four horizontally spaced heating pipes 4e are similarly disposed in the melting chamber Rf, with the front (inner) openings of the heating pipes connected to the rear space Sr in the partition 7 and the rear openings thereof leading to the rear communicating space Cr. The heating pipes 4a, 4b, 4c, 4d, 4e and 4f are individually spaced at intervals of 10 to 15 cm.

This arrangement forms a continuous air passage 8 leading from the heating pipes 4a through the front space Sf, heating pipes 4b, front communicating space Cf, heating pipes 4c and 4d, rear communicating space Cr, heating pipes 4e and rear space Sr to the heating pipes 4f.

In Fig. 1, the uppermost heating pipes 4a and 4f in the thermal decomposition and melting chambers are connected to the hot-air generator 21 and flue duct 22. However, the pipe connection of the pattern just described is not an absolutely necessary requirement of this invention. Any other pattern of pipe connection suffices so long as proper temperature is attained in the thermal decomposition chamber, melting chamber and communicating spaces.

A hopper 12 through which solid waste plastic P is charged inside is mounted at the upper end of the melting chamber Rr. Reference numeral 15 designates a cover to cover the top of the tank proper 3, with a duct 16 to collect the cracked gas connected to the highest point at the center thereof. The duct 16 is connected to a scrubber 52 described later.

The outer openings of the uppermost heating pipes 4a are connected to the hot-air generator 21, whereas the outer openings of the heating pipes 4f are connected to the flue duct 22 having a blower 23. Thus, hot air H supplied from the hot-air generator 21 is discharged to the outside through the flue duct 22. The temperature of the heating pipes 4a in the upper part of the thermal decomposition chamber Rf is higher than that of the heating pipes 4d, 4c, 4e and 4f in the melting chamber Rr. The heating pipes 4f located downstream has a lower temperature than the heating pipes 4a located upstream because the hot air H loses its heat as it travels through the air passage 8.

Accordingly, the diameter, length, number, space intervals and other conditions of the individual heating pipes 4a, 4b, 4c, 4d, 4e and 4f are determined so that the temperature of the lower heating pipes 4c and 4d becomes high enough (usually 250°C, or 70°C for vinyl chloride) to melt the waste plastic P when the temperature of the uppermost heating pipes 4a reaches a temperature high enough (usually 400°C, or 170°C for vinyl chloride) to thermally decompose the molten waste plastic L.

The thermal decomposition chamber requires not only high temperature but also large calorie. Therefore, the heating pipes 4a and 4b in the thermal decomposition chamber may be designed to have a larger diameter than the heating pipes 4c, 4d, 4e and 4f. Also, the heating pipes 4a and 4b in the thermal decomposition chamber may be zigzagged to increase the contact area with the surroundings.

A heat-resisting liquid glass (that becomes solid at room temperature) is coated on the outer surface of the heating pipes 4a and the inner surface of the tank proper 3 that come in contact with the molten waste plastic L and the cracked gas. Being made of steel or other metals, the heating pipes 4a and tank proper 3 are vulnerable to corrosive attack due to oxidation associated with heating. Particularly when the waste plastic is vinyl chloride, the chlorine generated by thermal decomposition rapidly corrodes and oxidizes metals. Therefore, the liquid glass 25a is coated on the surface of the heating pipes 4a and so on to impart adequate chemical resistance, corrosion resistance and durability. It is preferable to provide multilayered coatings by applying several layers of liquid glass 25a on the surface of the heating pipes 4a and so on, as shown in Fig. 3.

Furthermore, a heat-retaining device 30 shown in Fig. 5 is attached to the thermal decomposition tank 2. The heat-retaining device 30 has a heating device 31 which, in turn, has a heating segment 33. The heating segment 33 has a discharge port that is connected to one side of the upper part of the heat-retaining space 32 mentioned earlier via piping 35 having a valve 34 as shown in Figs. 2 and 5 and a suction port that is connected to the other side of the upper part of the heat-retaining space 32 via piping 37 having a valve 36. Thus, the heat-retaining oil C heated in the heating segment 33 is supplied through the piping 35 to the space S that constitutes the heat-retaining space 32 between the outer plate 14 and the tank proper 3 and thence through the piping 37 back to the heating segment 33, thus forming a heating circulation circuit. Reference numeral 38 designates an oil tank connected to the heating segment 33 via a valve 39, 40 a control unit that controls the operation and heating temperature of the heating segment 33, and 41 is an expansion unit that includes a function to liquefy the gasified heat-retaining oil.

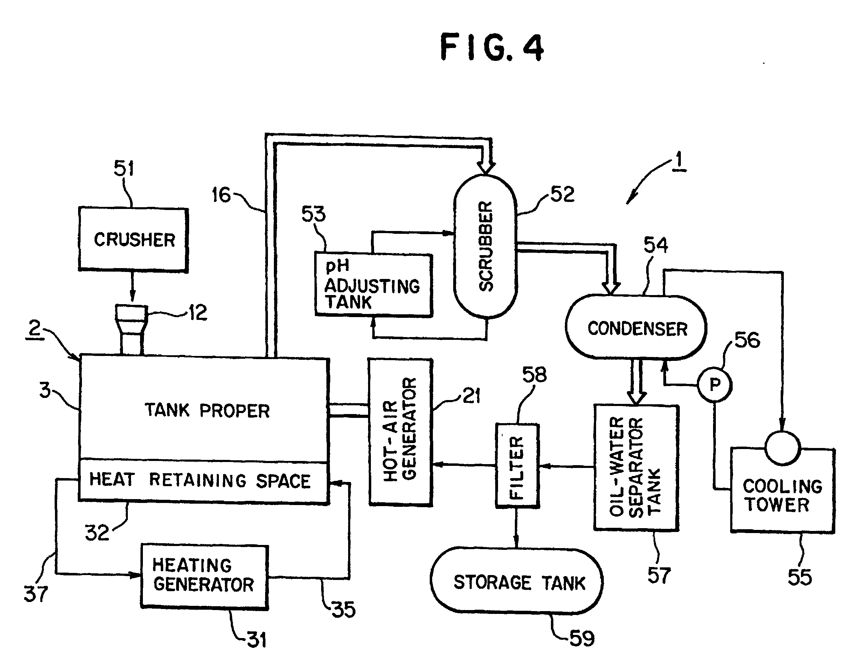

Fig. 4 shows the entire configuration of an oil recycling apparatus 1 having the thermal decomposition tank 2. In Fig. 4, reference numeral 51 designates a crusher that breaks large waste plastic into smaller pieces, 52 a scrubber that neutralizes chlorine gas, 53 a pH adjusting tank attached to the scrubber, 54 a condenser to liquefy the cracked gas, 55 a cooler (cooling tower) to cool the condenser 54, 56 a pump, 57 an oil-water separator tank to separate the obtained heavy oil from water, 58 a filter, and 59 a heavy oil storage tank.

The overall operations of the oil recycling apparatus 1 including the thermal decomposition tank 2 are described below by reference to the relevant drawings.

First, the hot-air generator 21 supplies hot air H to the uppermost heating pipes 4a, as indicated by the arrow in Fig. 1, that are thereby heated to approximately 400°C (or 170°C for vinyl chloride). The lower heating pipes 4c and 4d are heated to approximately 250°C (or 70°C for vinyl chloride). The hot air H having passed through the air passage 8 is then discharged outside via the flue duct 22, with the help of the suction provided by the blower 23.

The solid waste plastic P (such as polyethylene, polysterol and vinyl chloride) is charged into the hopper 12. The crusher 51 breaks larger pieces into smaller ones. The solid waste plastic P charged into the hopper 12 is then supplied to the inside of the melting chamber Rr.

In the tank proper 2, the waste plastic P falls to the bottom thereof where it is heated and melted by the heating pipes 4c and 4d kept at a relatively low temperature. The molten waste plastic L enters the thermal decomposition chamber Rf through the communicating space Rc and is stored in the tank proper 3 and the top surface thereof ascends as the quantity stored increases. When the ascending top surface reaches the heating pipes 4a kept at a high temperature in the upper part of the thermal decomposition chamber Rf, the molten waste plastic L heated by the heating pipes 4a is thermally decomposed and gasified.

The cracked gas thus produced passes through the duct 16 to the scrubber 52 where the chlorine gas contained in the cracked gas is neutralized. The cracked gas is then supplied from the scrubber 52 to the condenser 54 where it is cooled and liquefied into heavy oil (fuel oil A equivalent). The condenser 54 is always cooled by a cooling liquid supplied from the cooler 55. The obtained heavy oil is supplied to the oil-water separator tank 57 that removes water from the heavy oil. The filter 58 removes impurities from the heavy oil. The heavy oil thus obtained is stored in the storage tank 59. Part of the heavy oil is supplied to the hot-air generator 21 as a fuel.

When the oil recycling apparatus 1 is out of operation as during the night, the heat-retaining device 30 keeps hot the tank proper 3. The heating segment 33 heats the heat-retaining oil W to a temperature between 70 and 400°C. The heat-retaining oil W thus heated is supplied through the piping 35 to the space between the outer plate 14 and the tank proper 3 that make up the heat-retaining space 32. The heat-retaining oil W is then returned from the space to the heating segment 33 through the piping 37. This keeps warm the molten waste plastic L remaining in the tank proper 3, thereby significantly reducing the start-up time.

The description made by reference to Figs. 2 to 5 generally applies to an embodiment shown in Fig. 6.

In the second embodiment, however, the heating pipes 4a, 4b, 4c, 4d, 4e and 4f are zigzagged and connected to one another, as shown in Fig. 6.

As can be seen in Fig. 6, the heating pipes 4a and 4b are bent on the outside of the front and rear ends 3f and 3r and in the front and rear spaces Sf and Sr in the partition 7. The bent segments of the heating pipes thus formed are in contact with held in contact with the outside atmosphere, as a result of which the hot air passing through loses its heat gradually.

However, the temperature of the heating pipes can be gradually lowered without holding them in contact with the outside atmosphere, depending on the quantity and travel speed of the hot air. Therefore, protruding the heating pipes before and behind the tank proper 3 is not an essential requirement of this invention.

In addition to the embodiment shown in Fig. 6, a modification of the embodiment shown in Fig. 1 is also possible. In this modified design, the heating pipes 4a and 4b communicate with the heating pipes 4e and 4f through the front and rear spaces Sf and Sr in the partition 7.

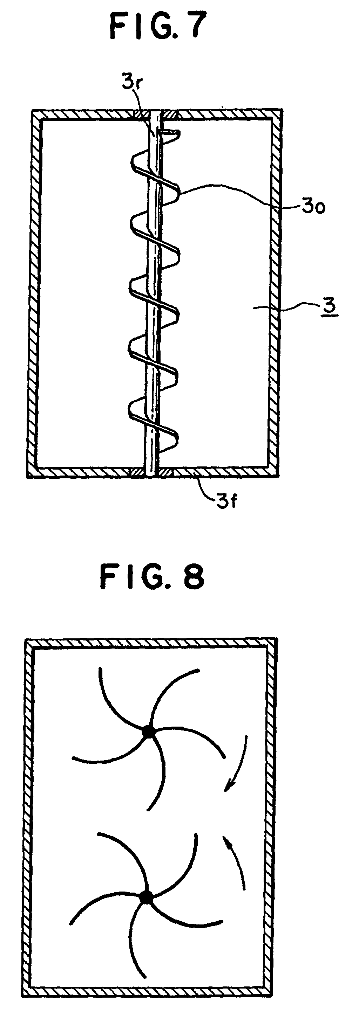

Fig. 7 shows the first design of the third embodiment that has a screw conveyor 30 to carry forward the molten waste plastic or solid waste plastic being melted charged between the front and rear ends 3f and 3r below the partition 7 (at the level of the melting chamber Rr and thermal decomposition chamber Rf, or at the level of the communicating space Rc) in the tank proper 3.

The screw conveyor quickly transports the waste plastic from rear to front. Stirring performed by the screw conveyor 30 in the tank proper 3 permits efficient conduction of heat from the heating pipes, thereby increasing the efficiency of melting and thermal decomposition.

Fig. 8 shows the second design of the third embodiment that has one or more horizontally rotating rotor blades, in place of the screw conveyor provided in the first design.

The rotary blades concaved in the direction of rotation carry forward the molten waste plastic or the waste plastic being melted and stirs the inside of the tank proper 3, thereby producing the same effect as the first design of the third embodiment in increasing the efficiency of operation.

This invention can be embodied in various ways other than those stated in the embodiments described above, in respect of detailed design, shape, material, quantity and method, without departing from its spirit and scope.

The oil recycling apparatus according to this invention has a tank proper whose front end is tapered to form a cross section constricted toward the bottom. The partition provided in the tank proper divides it into the thermal decomposition chamber at the front and the melting chamber at the rear, with the communicating space provided therebelow. Multiple heating pipes are spaced at given intervals both vertically and horizontally in the tank proper, with the air passages connected to the front and rear ends thereof. The heating pipes in the upper part of the thermal decomposition chamber have a higher temperature than the heating pipes in the melting chamber.

Thus, the oil recycling apparatus according to this invention have the following beneficial effects:
(1) The thermal decomposition tank doubling as the melting tank is conducive to the overall simplification and size reduction of the apparatus and the achievement of substantial cost savings and ease of maintenance.
(2) Processing of waste plastics at an increased speed greatly increases the productivity and economy in heavy oil production.

## Claims

1. A recycling apparatus for obtaining oil from waste plastic by applying thermal decomposition comprising a tank proper that is divided by a partition into a thermal decomposition chamber at the front and a melting chamber at the rear, with a space through which the thermal decomposition and melting chambers communicate with each other provided below the partition, and heating pipes leading from a hot-air generator through the thermal decomposition chamber, the communicating space and the melting chamber to a flue duct leading to the outside atmosphere.

2. A recycling apparatus for obtaining oil from waste plastic according to claim 1, in which multiple heating pipes having air passages at the front and rear are disposed on top of one another and between the front communicating space shut off from the outside and the partition in the tank proper, between the rear communicating space shut off from the outside and the partition in the tank proper, and between front and rear communicating spaces shut off from the outside and disposed below the partition in the tank proper, with the heating pipes between the front communicating space and the partition in the tank proper connected to the hot-air generator and the heating pipes between the rear communicating space and the partition in the tank proper connected to the flue duct on the outside.

3. A recycling apparatus for obtaining oil from waste plastic according to claim 1, in which one or more heating pipes are zigzagged and connected from the hot-air generator through the thermal decomposition chamber, communicating space and melting chamber to the flue duct communicating with the outside atmosphere.

4. A recycling apparatus for obtaining oil from waste plastic according to claim 1, in which the tank proper is constricted downward from above.

5. A recycling apparatus for obtaining oil from waste plastic according to claim 1, in which a screw conveyor to transport waste plastic from rear to front is provided below the partition in the tank proper.

6. A recycling apparatus for obtaining oil from waste plastic according to claim 1, in which one or more horizontal rotary blades are provided below the partition in the tank proper.

7. A recycling apparatus for obtaining oil from waste plastic according to claim 1, in which the upper part of the thermal decomposition chamber is connected to a scrubber to neutralize chlorine gas, the scrubber being connected to a condenser interlocked with a cooler and connected to an oil-water separator tank.

8. A recycling apparatus for obtaining oil from waste plastic according to claim 1, in which the oil-water separator tank is connected to a storage tank and the hot-air generator through a filter.

9. A recycling apparatus for obtaining oil from waste plastic according to claim 1, in which metal surfaces in contact with the cracked gas resulting from thermal decomposition are coated with a heat-resisting liquid glass.

10. A recycling apparatus for obtaining oil from waste plastic according to claim 8, in which the coating is accomplished by applying liquid glass in layers.

11. A recycling apparatus for obtaining oil from waste plastic according to claim 1, in which the heating pipes in the thermal decomposition chamber have a larger diameter than the heating pipes in the communicating spaces and melting chamber.

12. A recycling apparatus for obtaining oil from waste plastic according to claim 1, in which the heating pipes in the thermal decomposition chamber are zigzagged.

## Patentansprüche

1. Recyclingvorrichtung zur Gewinnung von Öl aus Kunststoffabfall durch thermische Zerlegung, die folgendes umfasst: einen eigentlichen Tank, der durch eine Unterteilung in eine vordere Kammer zur thermischen Zerlegung und eine rückwärtige Schmelzkammer geteilt ist, mit einem unterhalb der Unterteilung vorgesehenen Bereich, durch den die Kammer zur thermischen Zerlegung und die rückwärtige Schmelzkammer miteinander kommunizieren, und Heizrohre, die von einem Heißluftgenerator durch die Kammer zur thermische Zerlegung, den Kommunizierungsbereich und die Schmelzkammer zu einer Abzugsleitung führen, die ins Freie führt.

2. Recyclingvorrichtung zur Gewinnung von Öl aus Kunststoffabfall nach Anspruch 1, bei der mehrere, an Vorder- und Hinterende Luftdurchgänge aufweisende Heizrohre übereinander angeordnet sind und zwischen dem vorderen, nach außen abgeschlossenen Kommunizierungsbereich und der Unterteilung im eigentlichen Tank, zwischen dem rückwärtigen, nach außen abgeschlossenen Kommunizierungsbereich und der Unterteilung im eigentlichen Tank sowie zwischen vorderem und rückwärtigem, nach außen abgeschlossenem Kommunizierungsbereich unter der Unterteilung im eigentlichen Tank angeordnet sind, wobei die Heizrohre zwischen dem vorderen Kommunizierungsbereich und der Unterteilung im eigentlichen Tank mit dem Heißluftgenerator und den Heizrohren zwischen dem rückwärtigen Kommunizierungsbereich und der Unterteilung im eigentlichen Tank, die zur Abzugsleitung an der Außenseite führen, verbunden sind.

3. Recyclingvorrichtung zur Gewinnung von Öl aus Kunststoffabfall nach Anspruch 1, bei der ein oder mehrere Heizrohre zickzackförmig ausgebildet sind und vom Heißlufterzeuger aus durch die Kammer zur thermischen Zerlegung, den Kommunizierungsbereich und die Schmelzkammer mit der Abzugsleitung, die ins Freie führt, verbunden sind.

4. Recyclingvorrichtung zur Gewinnung von Öl aus Kunststoffabfall nach Anspruch 1, bei der sich der eigentliche Tank von oben nach unten verjüngt.

5. Recyclingvorrichtung zur Gewinnung von Öl aus Kunststoffabfall nach Anspruch 1, bei der ein Schraubenförderer zum Befördern des Kunststoffabfalls von hinten nach vorn, unterhalb der Unterteilung im eigentlichen Tank vorgesehen ist.

6. Recyclingvorrichtung zur Gewinnung von Öl aus Kunststoffabfall nach Anspruch 1, bei der ein oder mehrere horizontale Drehblätter unterhalb der Unterteilung im eigentlichen Tank vorgesehen sind.

7. Recyclingvorrichtung zur Gewinnung von Öl aus Kunststoffabfall nach Anspruch 1, bei der der obere Teil der Kammer zur thermischen Zerlegung mit einem Wascher zur Neutralisierung von Chlorgas verbunden ist, wobei der Wascher mit einem Kondensator, an welchen eine Kühlvorrichtung angeschlossen ist, und mit einem Öl-Wasser-Separator-Tank verbunden ist.

8. Recyclingvorrichtung zur Gewinnung von Öl aus Kunststoffabfall nach Anspruch 1, bei der der Öl-Wasser-Separator-Tank über einen Filter mit einem Speichertank und dem Heißluftgenerator verbunden ist.

9. Recyclingvorrichtung zur Gewinnung von Öl aus Kunststoffabfall nach Anspruch 1, bei der Metalloberflächen in Kontakt mit dem gespaltenen Gas, das bei der thermischen Zerlegung entsteht, mit hitzebeständigem Flüssigglas ummantelt sind.

10. Recyclingvorrichtung zur Gewinnung von Öl aus Kunststoffabfall nach Anspruch 8, bei der der Überzug aus Flüssigglas schichtweise ausgeführt wird.

11. Recyclingvorrichtung zur Gewinnung von Öl aus Kunststoffabfall nach Anspruch 1, bei der die Heizrohre in der Kammer zur thermischen Zerlegung einen größeren Durchmesser haben als die Heizrohre in dem Kommunizierungsbereich und in der Schmelzkammer.

12. Recyclingvorrichtung zur Gewinnung von Öl aus Kunststoffabfall nach Anspruch 1, bei der die Heizrohre in der Kammer zur thermischen Zerlegung zickzackförmig ausgebildet sind.

## Revendications

1. Appareil de recyclage pour la récupération d'huile à partir de déchets de matière plastique en appliquant une décomposition thermique, comprenant une cuve proprement dite qui est divisée par une cloison en une chambre de décomposition thermique à l'avant et une chambre de fusion à l'arrière, avec un espace à travers lequel les chambres de décomposition thermique et de fusion communiquent l'une avec l'autre ménagé en dessous de la cloison, et des conduites de chauffage partant d'un générateur d'air chaud, et passant par la chambre de décomposition thermique, l'espace de communication et la chambre de fusion, jusqu'à un conduit de fumée menant à l'atmosphère extérieure.

2. Appareil de recyclage pour la récupération d'huile à partir de déchets de matière plastique selon la revendication 1, dans lequel de nombreuses conduites de chauffage ayant des passages d'air à l'avant et à l'arrière sont disposées les unes par dessus les autres et entre l'espace de communication avant isolé de l'extérieur et la cloison dans la cuve proprement dite, entre l'espace de communication arrière isolé de l'extérieur et la cloison dans la cuve proprement dite, et entre les espaces de communication avant et arrière isolés de l'extérieur et disposés en dessous de la cloison dans la cuve proprement dite, les conduites de chauffage entre l'espace de communication avant et la cloison dans la cuve proprement dite étant reliées au générateur d'air chaud et les conduites de chauffage entre l'espace de communication arrière et la cloison dans la cuve proprement dite étant reliées au conduit de fumée sur l'extérieur.

3. Appareil de recyclage pour la récupération d'huile à partir de déchets de matière plastique selon la revendication 1, dans lequel une ou plusieurs conduites de chauffage sont en forme de zigzag et sont reliées à partir du générateur d'air chaud, en passant par la chambre de décomposition thermique, l'espace de communication et la chambre de fusion, jusqu'au conduit de fumée communiquant avec l'atmosphère extérieure.

4. Appareil de recyclage pour la récupération d'huile à partir de déchets de matière plastique selon la revendication 1, dans lequel la cuve proprement dite est rétrécie vers le bas en partant du haut.

5. Appareil de recyclage pour la récupération d'huile à partir de déchets de matière plastique selon la revendication 1, dans lequel un transporteur à vis pour transporter des déchets de matière plastique d'arrière en avant est prévu en dessous de la cloison dans la cuve proprement dite.

6. Appareil de recyclage pour la récupération d'huile à partir de déchets de matière plastique selon la revendication 1, dans lequel une ou plusieurs pales rotatives horizontales sont prévues en dessous de la cloison dans la cuve proprement dite.

7. Appareil de recyclage pour la récupération d'huile à partir de déchets de matière plastique selon la revendication 1, dans lequel la partie supérieure de la chambre de décomposition thermique est reliée à un épurateur pour neutraliser le chlore gazeux, l'épurateur étant relié à un condenseur interpénétré avec un refroidisseur et relié à une cuve de séparation huile-eau.

8. Appareil de recyclage pour la récupération d'huile à partir de déchets de matière plastique selon la revendication 1, dans lequel la cuve de séparation huile-eau est reliée à une cuve de stockage et au générateur d'air chaud par l'intermédiaire d'un filtre.

9. Appareil de recyclage pour la récupération d'huile à partir de déchets de matière plastique selon la revendication 1, dans lequel des surfaces métalliques en contact avec le gaz de craquage résultant de la décomposition thermique sont revêtues d'un verre liquide thermorésistant.

10. Appareil de recyclage pour la récupération d'huile à partir de déchets de matière plastique selon la revendication 8, dans lequel le revêtement est réalisé en appliquant du verre liquide en couches.

11. Appareil de recyclage pour la récupération d'huile à partir de déchets de matière plastique selon la revendication 1, dans lequel les conduites de chauffage dans la chambre de décomposition thermique ont un diamètre plus grand que les conduites de chauffage dans les espaces de communication et la chambre de fusion.

12. Appareil de recyclage pour la récupération d'huile à partir de déchets de matière plastique selon la revendication 1, dans lequel les conduites de chauffage dans la chambre de décomposition thermique sont en forme de zigzag.
